Europäisches Patentamt

European Patent Office

Office européen des brevets

(11) Publication number: **0 098 125**
A1

## (12) EUROPEAN PATENT APPLICATION

(21) Application number: **83303666.8**

(22) Date of filing: **24.06.83**

(51) Int. Cl.³: **G 11 B 7/24**

(30) Priority: **25.06.82 JP 110086/82**

(43) Date of publication of application:
**11.01.84 Bulletin 84/2**

(84) Designated Contracting States:
**DE FR GB**

(71) Applicant: **KONISHIROKU PHOTO INDUSTRY CO. LTD.
No. 26-2, Nishishinjuku 1-chome Shinjuku-ku
Tokyo 160(JP)**

(72) Inventor: **Taxey, Sato
2-5-19 Owada-cho
Hachioji-shi Tokyo(JP)**

(72) Inventor: **Kinu, Hoga
5-406, 6498, Hino
Hino-shi Tokyo(JP)**

(72) Inventor: **Shinichi, Nishi
2-5-19 Owada-cho
Hachioji-shi Tokyo(JP)**

(72) Inventor: **Fumio, Shimada
3-5-20 Kawasaki Hamuramachi
Nishitama-gun Tokyo(JP)**

(74) Representative: **Ellis-Jones, Patrick George
Armine et al,
J.A. KEMP & CO. 14 South Square Gray's Inn
London WC1R 5EU(GB)**

(54) Recording media for optical information.

(57) There is disclosed a recording medium for optical information by recording and reproducing information with a high density energy beam wherein a recording layer has a highly reflective surface and the recording layer is a layer which is prepared by subjecting a layer containing physical development nucleus to a physical development process by which physical development proceeds throughout its entire region.

This improved recording medium can photographically record necessary information with optionally variable reflectivity.

**FIG. 6**

- 1 -

## Recording media for optical information

This invention relates to a recording media for optical information which conducts record and reproduction of information by making use of a high density energy beam. More particularly, it is concerned with a recording medium for optical information wherein a recording layer has a highly reflective surface and is a layer prepared by subjecting a layer containing physical development nucleus to a physical development thereof throughout its entire region.

In the field of a high density recording medium using as a mean for recording and reproducing information laser beam capable of giving a high illumination and a shortened period for exposure, there has been recently employed as a memory medium for image information such as a document file, an image file and the like a recording medium having "DRAW" (Direct Read After Write) characteristic properties, which are capable of being directly reproduced without any post-treatment immediately after recording.

As a recording layer for the said recording medium there has been previously proposed a thin film composed of chalcogen type compounds such as semimetals, e.g. Te, Bi cr Se or oxide thereof, Se-Te-As, Te-As and the like. However, such a recording medium has disadvantages of being not suitable for continuous mass production because of a vacuum equipment employed in the manufacture process thereof, of an increased error rate in reproducing recorded information because of oxidative degradation of the compound contained in the said recording layer and of a poor reliability on safety of the compounds being employed.

For the purpose of eliminating the above-mentioned disadvantages, there was disclosed a recording medium employing a photosensitive silver halide emulsion, for example, in Japanese Provisional Patent Publications No. 108995/1980, No. 33995/1981, No. 49296/1981 and No. 49297/1981. The technique disclosed in said each Publication is to precipitate out reflective silver grains in the neighborhood of a surface of a silver halide emulsion layer placed over a support by photographic chemical and physical development and this may be said as a highly sensitive recording medium for optical information, in view of gelatin being contained with a superior heat insulating property to the metal.

However, the above-mentioned recording medium has a disadvantage that a high reflectivity is attained solely in the neighborhood of a surface of the recording layer and thus it is necessary to record by the use of change in reflectivity on the surface and it is not suitable to make record reproduction through a support. More specifically, it is requisite to prepare a protective layer of $SiO_2$, polymethyl methacrylate (PMMA) and the like on a recording medium or to prepare the whole recording medium in the form of a capsule, in order to protect pits of the recording layer surface from dust. Accordingly, there is required the step of coating a protective layer or forming a capsule and a method for recording through a transparent support such as PMMA, glass or the like is usually applied in order to avoid the above complicated procedures, whereupon it is known to use a recording medium overlaying one sheet of a recording medium with the other layer so as to place outside the transparent supports. However, in this instance, reflectivity on the support side of a recording layer in those recording media as disclosed in the above-recited Publications becomes insufficient and this is a practically serious drawback.

For eliminating the said drawback, Japanese Patent Application No. 43305/1982 proposed a recording media for optical information wherein a layer containing a physical development nucleus is provided on a transparent support, and a layer containing a metallic compound is laminated on a layer which is, if necessary, removable after physical development thereon. However, said recording medium can show a reflectivity necessary to read information by a reflective light through the support, the medium was found to show a disadvantage in its production that physical development is initiated from the surface opposite to the support in the physical development nucleus-containing layer and thus an increased reflection on the support side is not yet sufficient, and sensitivity and S/N ratio (a ratio of signal to noise) tend to vary as physical development proceeds.

It is a primary object of this invention to provide a recording medium for optical information with a higher sensitivity which can be written and read by means of a high density energy beam through a base or support without the aforesaid drawbacks.

Another object of this invention is to provide a recording medium for optical information which can provide an improved record reproduction quality and a reproduction signal with a high S/N ratio, as a result from a thin-filmed recording layer.

As a result of the present inventors' various studies on the prior art, it has now been found that the above-mentioned objects can be accomplished by the present recording medium for optical information; namely, a recording medium for optical information to record and reproduce information by the use of a high density energy beam wherein a surface of a recording layer is highly reflective and the said recording layer is a layer prepared by subjecting a layer containing physical development nucleus to a physical development throughout its entire region.

More specifically, in this invention, the above-mentioned energy beam which was permeated a support substantially transparent to a high density energy beam is converted to heat by absorption with metal fine grains formed in a recording layer by physical development and the absorbed heat is locally accumulated and blows off an organic polymeric compound as a dispersion medium for the said recording layer because of its low thermal conductivity to form pits. At this point, the said recording layer is a layer wherein physical development proceeds throughout the entire direction of thickness of the physical development nucleus-containing layer and metal fine grains may be also present in the neighborhood of the interface on the support side of the recording layer which is most remote from the surface opposite to the support. Then, an improved absorptivity of a recording beam in a recording layer, an improved reflectivity in the neighborhood of the support side interface and a reduced reflection unevenness can be given and, thus, there can be provided a recording medium for optical information having a high sensitivity and a high S/N ratio.

In this invention, physical development, which was processed throughout a physical development nucleus-containing layer toward the direction of its thickness, can be accomplished under strong physical development conditions, for example, by a strong developing agent, a high temperature bath, a prolonged period of time, a strong alkali and the like.

The present invention is illustrated in detail with reference to the attached drawings.

Fig. 1 represents a cross-sectional view of a precursor of a recording medium for optical information made in accordance with this invention before physical development;

Fig. 2 is a cross-sectional view of the present recording medium for optical information made in accordance with this invention after physical development;

Fig. 3 is a cross-sectional view of the present recording medium for optical information after physical development and subsequent removal of a metallic compound dispersion layer;

Fig. 4 is a cross-sectional view of the present recording medium for optical information after irradiation with a high density energy beam;

Fig. 5 and Fig. 6 represent, respectively, cross-sectional views of the present recording medium for optical information and the precursor thereof when pattern exposure is applied to a photosensitive metallic compound-dispersed layer;

Fig. 7 is a chart of an electron spectroscopy for chemical analysis (ESCA: Depth Profile) on the present recording medium for optical information; and

Fig. 8 is a chart of the ESCA on the comparative recording medium for optical information.

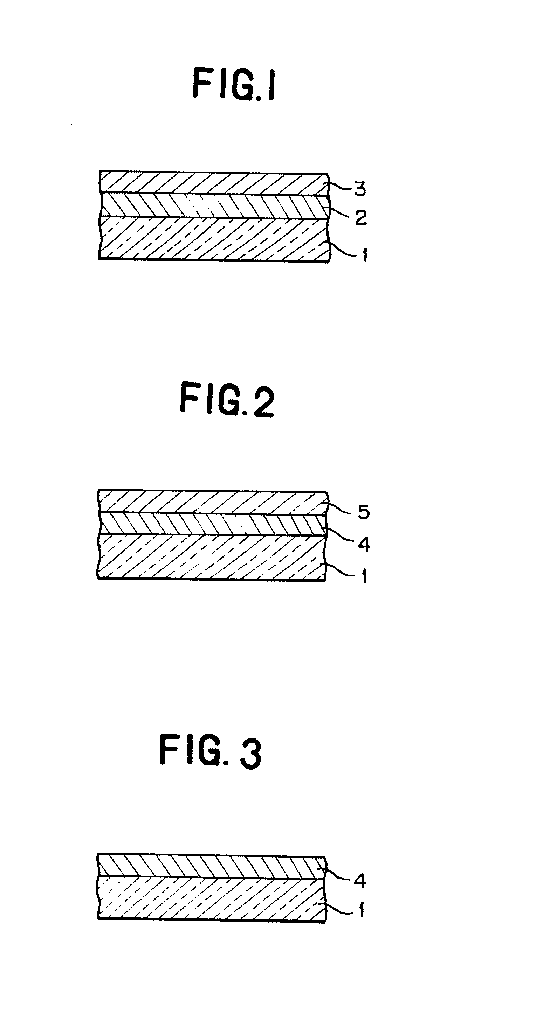

Referring now to Fig. 1, there is illustrated a cross-sectional view of one embodiment for the present recording medium precursor for optical information (a recording medium for optical information before development is referred to as "recording medium precursor for optical information"). In Fig. 1, there are provided support 1, a layer containing a physical development nucleus 2 wherein a physical development nucleus is dispersed in a hydrophilic colloidal dispersion medium and a metallic compound-dispersed layer 3 which is laminated over the said physical development nucleus-containing layer 2.

As the support which may be preferably employed in this invention, there may be used any of those which are substantially transparent to high density energy beam and illustrative examples thereof may include cellulose triacetate, polyethylene terephthalate, polymethyl methacrylate, polycarbonate, ceramics, polyimide resin, glasses, metals and the like. The support may be particularly undercoated or not, but the undercoated support is preferable. As the undercoating agent for this purpose, there may be employed, for example, silane coupling agents, silicates, titanium coupling agents and the like and the silane coupling agent disclosed in U.S. Patent No. 3,661,584 is particularly preferable.

Also, the support may be subjected to surface treatment, e.g., corona discharge treatment, plasma discharge treatment, ion bombardment and the like for improving adhesion. Further, there may be similarly applied a support having guide grooves (fine relief-like) for tracking while recording and reproducing.

In this invention, as a method for forming a physical development nucleus-containing layer over a base or support, there may be satisfactorily utilized blade coating, air-knife coating, bar coating, roll coating, curtain coating, spinner coating and so on. A film thickness of the said layer is approximately 0.01 $\mu$ to 2 $\mu$ and preferably 0.05 $\mu$ to 0.5 $\mu$.

As the physical development nucleus which may be employed in the present physical development nucleus-containing layer, there may be employed any well-known physical development nuclei. For instance, a group thereof may preferably include heavy metal sulfides, e.g. sulfides of zinc, chromium, potassium, iron, cadmium, cobalt, nickel, lead, antimony, bismuth, silver, cerium, arsenic, copper and rhodium, as well as selenides of heavy metals, e.g. selenides of lead, zinc, antimony and nickel.

Another useful group of physical development nucleus may include noble metals, e.g., silver, gold, platinum, palladium, mercury and the like and it is preferable that the said metal is present as colloidal particles in a binder. Also, salts of the said metals, preferably the corresponding simple inorganic and readily reducible salts such as silver nitrate, gold chloride, gold nitrate and the like are useful as a physical development nucleus.

Other useful group of physical development nucleus may include thio compounds, e.g. silver thiooxalate and lead or nickel complex thereof, thioacetamide and the like.

The layer which contains a physical development nucleus according to this invention may be formed on a support by means of any suitable methods such as vapor deposition, sputtering, CVD method and the like with the aforesaid heavy metals, noble metals or sulfides and selenides thereof. In this instance, such method as vapor deposition, sputtering or CVD method can provide a very thin physical development nucleus-containing layer and, therefore, gives an advantage of effectively utilizing energy of the recording beam; a film thickness thereof is 5 Å to 1000 Å, preferably 20 Å to 500 Å. Preferable physical development nucleus is a heavy metal sulfide, e.g. sulfides of zinc, cadmium, silver, lead and the like and a metal, e.g. silver, gold, palladium, copper and the like.

A grain size of nucleus fine grain as aforesaid physical development nucleus should be sufficiently small to conduct effective physical development and is usually 0.002 $\mu$ to 0.2 $\mu$, preferably 0.01 $\mu$ to 0.05 $\mu$.

As the metallic compound which may be used in the said metallic compound dispersed layer, i.e. a layer capable of supplying a metal atom to a physical development nucleus through physical development, there may be employed a gold halide complex, i.e. chloroaurates and the like, e.g. sodium chloroaurate; a copper salt, e.g. $CuCl_2$, CuSCN; a lead salt, e.g. PbO, $PbCl_2$, $PbBr_2$; an iron salt, e.g. iron oxalate, iron nitrate; a Pd complex, e.g. oxalate, malonate; a silver salt, e.g. AgCl, AgBr, AgI, $AgNO_3$, $Ag_2SO_4$, $Ag_2S$; a cobalt salt, e.g. $CoCl_2$, $CoSO_4$; a nickel salt, e.g. $Ni(NO_3)_2$, $NiCl_2$; $HgCl_2$, $BiCl_2$, $TeCl_4$, $InCl_3$, $InBr_3$; and the like and the silver salt, copper salt, nickel salt and cobalt salt can be preferably employed in this invention with a silver halide being most preferable. In this instance, a silver halide may also show an advantage of non-pollution. A grain size of the said silver halide is 0.01 μ to 1 μ, preferably 0.02 μ to 0.1 μ.

Where a silver halide emulsion is used in the metallic compound dispersed layer in this invention, it is desirable to incorporate therein an antifoggant, a coating aid, a hardener and the like, but it is not necessarily required to apply thereto a sensitizing treatment because of no need for sensitivity to visible light. Also, it is feasible to add a developing agent, e.g. hydroquinone or phenidone directly to a silver halide emulsion and subsequently develop it solely in an alkali bath containing a solvent for a silver halide, thereby precipitating out silver in a silver mirror-like form. Alternatively, it may be practicable to conduct physical development in solution capable of supplying a metal atom directly to a physical development nucleus layer from a developer without laminating the metallic compound dispersed layer.

As the colloid dispersion medium for the present physical development nucleus-containing layer, there may be employed any well-known hydrophilic colloids and illustrative examples thereof may include, for example, gelatin, alkali-processed gelatin, acid-processed gelatin and gelatin derivatives; colloidal albumin; casein; cellulose derivatives, e.g. carboxymethyl cellulose, hydroxyethyl cellulose and the like; polysaccharide derivatives, e.g. soldium alginate, starch derivatives and the like; synthetic hydrophilic polymers, e.g. polyvinyl alcohol, poly-N-vinylpyrrolidone, polyacrylic acid copolymers, polyacrylamide and the like. As other colloid dispersion medium, there may be also mentioned phenol resins, epoxy resins, melamine resins and the like. If necessary, these media may be employed in combination of the two or more. As the aforesaid colloid

dispersion medium for this invention, one may preferably use a hydrophilic colloid with a low thermal conductivity.

In Fig. 2, there is illustrated a cross-sectional view of one embodiment for the recording medium for optical information after the present precursor of the recording medium for optical information is subject to physical development. In Fig. 2, a recording layer 4 is the layer which is prepared by subjecting the original physical development nucleus-containing layer to the physical development and given a reflectivity by a metal supplied through the physical development and fine metal grains can be present throughout the recording layer as the physical development was subjected even in the neighborhood of the interface on a support side of the recording layer. The physical development results a metallic compound dispersed layer 5 with a reduced amount of the metal.

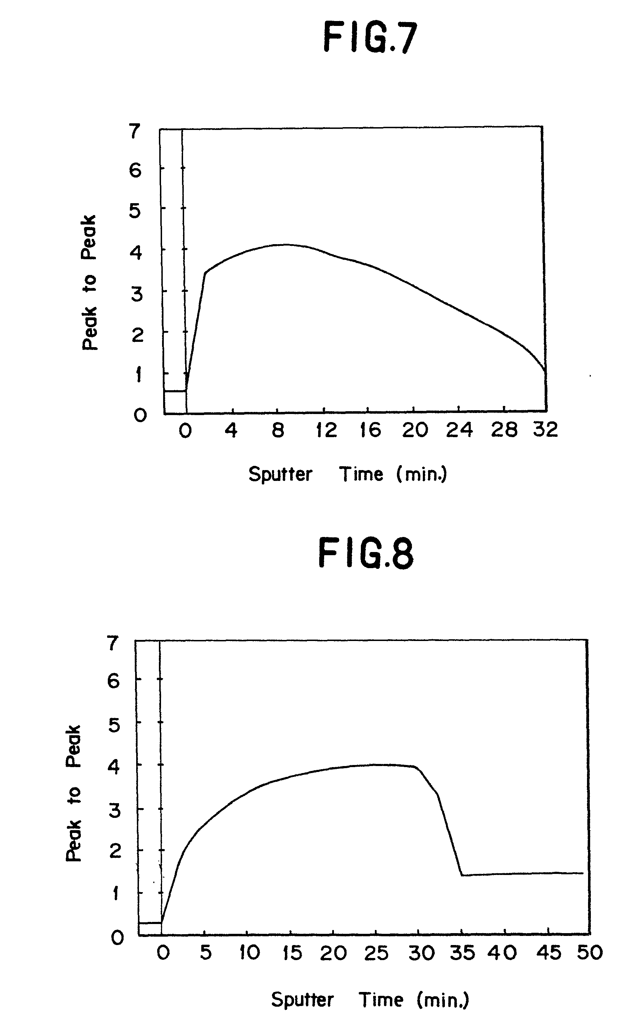

A physical developer which may be employed for the above physical development is an alkaline or acidic solution containing at least a developing agent and preferably an alkaline solution with pH 9 or higher. A strongly alkaline solution of pH 9 or higher can more readily provide a stronger physical development, physical development throughout toward the direction of a thickness of a physical development nucleus-containing layer and presence of metal fine grains throughout toward the direction of a thickness of the recording layer when the said layer is made as illustrated in Fig. 7.

As the said developing agent, there may be employed, for example, Metol, amidol, phenidon, hydroquinone, catechol, p-phenylenediamine, ascorbic acid and derivatives thereof; hydrazine, and hydroxide and salts thereof; and the like and, *inter alia*, it is preferred to employ a strong developing agent such as amidol, phenidon, Metol and the like. It is also preferred to apply a higher developing temperature than that for ordinary physical development, desirably around 20 $^{\circ}$C to 40 $^{\circ}$C.

In the recording medium for optical information according to this invention, layer 5 in Fig. 2 may be, for instance, stripped off or detached after physical development and Fig. 3 shows a cross-sectional view of one embodiment of the present recording medium for optical information after physical development and subsequent removal of a metallic compound dispersed layer.

Removal of the metallic compound dispersed layer 5 after physical development can be accomplished, for example, by detachment, dissolution, peeling-apart and the like. The above detachment may be carried out by dissolving a hydrophilic colloid dispersion medium in metallic compound dispersed layer 5 or by raising a temperature when washed up to a temperature to form a sol (hereinafter referred to as "hot water washing") in a washing step after physical development. In this instance, it is preferable to harden the recording layer 4 beforehand with a hardener so that removal of metallic compound dispersed layer 5 may be effectively achieved.

Alternatively, removal may be preferably effected by dipping metallic compound dispersed layer 5 into a concentrated solution of a strong electrolyte in water to bring about film shrinkage followed by washing with hot water. As the strong electrolyte which may be employed, there may be preferably mentioned, for example, a salt formed with a strong acid and a strong base such as sodium sulfate and so on. Similar effect may be also obtained by using a physical developer containing the said strong electrolyte. A liquid temperature on the said hot water washing is 20 °C to 50 °C, when the dispersion medium in a metallic compound dispersed layer is a hydrophilic colloid and the said medium is gelatin, and preferably around 40 °C ± 5 °C.

The present recording medium for optical information may be prepared, for example, as mentioned above:

The present recording medium for optical information should have a reflectivity through a support of 10 to 80 %, preferably 20 to 70 % (a reflectivity to a readout light), as reading of information should be done with reflected light. A reflectivity within the above range is defined as high reflectivity. Lower reflectivity than the above-defined may give a decrease in S/N ratio, which leads to a difficult reading of information.

The present recording medium may be heat-treated, if necessary, in the presence or absence of oxygen for increasing reflectivity and reducing a film thickness. A preferable temperature range therefor is about 250 °C to 400 °C.

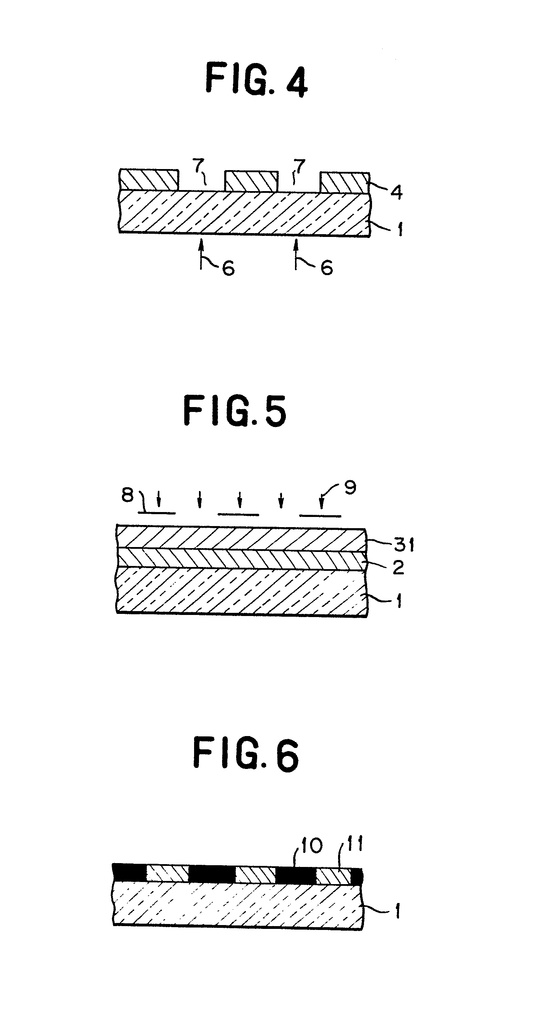

Referring to Fig. 4, there is illustrated a cross-sectional view of one embodiment of the present recording medium for optical information wherein irradiated portion of the recording layer is dissolved or blew off by irradiation with a high density energy beam from the direction of a support to form pits. In Fig. 4, a high density energy beam is irradiated in the direction of arrow 6 to form pits 7. According to this invention, information may be readable and reproducible with a weaker high density energy beam than the writing beam by making use of a reduced reflectivity in the said pit portion 7. As the high density energy beam which may be employed in this invention for recording pit information, there may be employed, for example, any of xenon lamp, mercury lamp, arc light and the like and laser light is preferable in view of higher density recording. As the laser beam, there may be employed any light from continuous oscillation or pulse oscillation and, illustratively, there may be used ruby laser (6943 Å), argon ion laser (4880 Å, 5145 Å), glass laser (1.06 μ), He-Ne laser (6328 Å), krypton laser (6471 Å), He-Cd laser (4416 Å, 3250 Å), color laser, semi-conductor laser and the like.

A high density energy beam for recording and reproducing in the present recording medium may be of the same or different type and may be favorably irradiated through a transparent support (called as a support side) or directly onto the surface of the recording layer opposite to a support side.

Fig. 5 shows a cross-sectional view of one embodiment of the recording medium for optical information or precursor thereof wherein a photosensitive metallic compound dispersed layer is employed as a metallic compound dispersed layer and pattern exposure is applied onto the surface of said layer. In Fig. 5, a photosensitive metallic compound dispersed layer 31 is formed and pattern 8 is exposed to a light 9 adopted to make the said layer 31 sensitized. In this embodiment, the above-mentioned silver halide may be preferably employed as the photosensitive metallic compound. Where a photosensitive metallic compound dispersed layer is laminated over a physical development nucleus-containing layer, solution physical development action may be inhibited in exposed portion, when physically developed, by pattern exposure onto the surface of the said photosensitive layer 31 and, as a result, a pattern can be formed which may modify reflectivity of the recording layer, i.e. the physical development nucleus-containing layer before physical development, in a patterned fashion.

Fig. 6 shows a pattern in the recording layer as made above upon patterned change in reflectivity: Namely, a weakly reflective portion 10 and a strongly reflective portion 11 are formed in the recording layer after the metallic compound dispersed layer is removed with physical development.

As is apparent from the above description, it has been noted that a track or other necessary information may be photographically recorded as required on the recording medium of this invention and also that any required reflectivity may be optionally given to the present recording medium through exposure, development or other means. This is not only significant as optional controlling is feasible over writing energy, but important in reducing the minimum energy value required for writing (hereinafter referred to as "threshold energy value") as clearly demonstrated by all the present samples in the following examples.

This invention will be more fully illustrated by way of the following examples, but they are not contemplated to be limiting the scope of this invention.

Example 1

An aqueous solution of colloidal silver grains dispersed in gelatin as a physical development nucleus was prepared by reduction of silver nitrate with dextrin. A weight ratio of silver to gelatin was 32 % and a grain size of the colloidal grain was about 300 Å. This solution was coated by means of a wire bar over a polymethyl methacrylate plate with a thickness of 1.0 mm to a coated film thickness after drying of 0.1 µ, said plate being previously executed undercoating treatment by the use of a plasma discharge and a silane coupling agent, thereby forming a nearly colorless, transparent layer containing a physical development nucleus.  Over this physical development nucleus-containing layer was coated a fine grain silver iodobromide gelatin emulsion as a metallic compound dispersed layer (3 molar % as silver iodide; average grain size of 0.05 μ) to a coated silver amount of 3 g/m$^2$, thereby producing a sample.

This sample was developed without exposure at 40 °C for 2 minutes with a developer having the following composition and then washed with a hot water at 37 °C to strip off the emulsion layer.

Developer

| | |
|---|---|
| Phenidone | 1.0 g |
| Anhydrous sodium sulfite | 65.0 g |
| Hydroquinone | 12.0 g |
| KOH | 15.0 g |
| KBr | 0.5 g |
| Sodium thiosulfate | 5.0 g |
| Water added to make up 1 ℓ and then 120.0 g of sodium sulfate added. | |

Consequently, observation through the polymethyl methacrylate support plate showed production of a siliver mirror having metallic luster and a reflectivity of 50% at 633 nm.

The sample was analyzed for a silver distribution directed toward the thickness in the recording layer thereof by an electron spectroscopy for chemical analysis (ESCA).  Its depth profile is shown in Fig. 7 with a solid line.  The axis of abscissa is a sputter time showing an approach to the acrylate base plate after 30 to 32 minutes and the axis of ordinate represents a relative amount of the silver detected.

It was seen in the recording layer that there remains no silver as a colloidal silver as such not developed in the direction to its thickness and thus physical development was processed throughout the recording layer; namely, physical development was processed up to the interface on the support side.

To the present recording medium sample thus obtained was scanned a He-Ne laser beam having a beam diameter of 1.4 µ and an output on a recording surface of 10 mw at a scanning rate of 5.2 m/sec. using a rotating mirror and a pulse signal of 500 n sec. was given with an acoustic optical modulator to effect a writing recording for forming pits. As a result, a recording surface having a remarkable difference in reflectivity was formed to provide a favourable signal contrast and make feasible an easy optical reading. A threshold energy value for writing at this point was about 50 $mJ/cm^2$ and S/N ratio in record reproduction was not less than 50 dB.

Comparative Example 1

A sample was prepared in the same manner as in Example 1 except that a layer containing physical development nucleus was of a film thickness of 0.2 µ and development was effected at a temperature of a developing solution of 20 °C for 30 seconds. Said recording medium showed a low reflectivity of 20 %, an insufficient physical development, a recording threshold energy value of about 200 $mJ/cm^2$ and a record reproduction S/N ratio of about 30 dB and thus was inferior to the present recording medium according to Example 1.

This sample was also subjected to the ESCA analysis as done in Example 1. Its depth profile is shown in Fig. 8. No approach to the base plate was accomplished even after sputter over 50 minutes, a constant region of the detected silver amount after 35 minutes was the portion wherein colloidal silver remained undeveloped and thus it was seen that physical development proceeded up to only the midway of the recording layer.

Claims:

1.  In the recording medium for optical information comprising a support and a recording layer and recording and reproducing information by a high density energy beam, the improvement wherein said recording layer has a highly reflective surface and said recording layer is a layer which is prepared by subjecting a layer containing physical development nucleus to a physical development process by which physical development proceeds throughout its entire region.

2.  A recording medium according to Claim 1, wherein a layer having dispersed therein a metallic compound is laminated over said recording layer.

3.  A recording medium according to Claim 1, wherein said recording layer has a film thickness of 0.01 to 2 $\mu$.

4.  A recording medium according to Claim 1, wherein said physical development nucleus is selected from a sulfide of a heavy metal, a selenide of a heavy metal, a noble metal and a salt thereof and a thio compound.

5.  A recording medium according to Claim 1, wherein said physical development nucleus is a sulfide of zinc, cadmium, silver or lead or a silver, gold, palladium or copper metal.

6.  A recording medium according to Claim 1, wherein said physical development nucleus is of a grain size from 0.002 $\mu$ to 0.2 $\mu$.

7.  A recording medium according to Claim 1, wherein said physical development nucleus-containing layer is a layer having dispersed physical development nucleus in a hydrophilic colloid dispersion medium.

8. A recording medium according to Claim 7, wherein said colloid dispersion medium is gelatin, a modified gelatin, a gelatin derivative, colloidal albumin, casein, a cellulose derivative, a polysaccharide derivative, a synthetic hydrophilic polymer, a phenol resin, an epoxy resin or a melamine resin.

9. A recording medium according to Claim 1, wherein said physical development is effected with a developing solution containing a developing agent and having a pH range of 9 or higher.

10. A recording medium according to Claim 1, wherein said recording medium has a reflectivity to a reflected light through said support of 10 to 80 %.

11. A recording medium according to Claim 10, wherein said recording medium has a reflectivity of 20 to 70 %.

12. A recording medium according to Claim 1, wherein said recording medium has pits formed by irradiation with a high density energy beam to dissolve or blow off irradiated portions in said recording layer.

13. A recording medium according to Claim 12, wherein said high density beam is a laser beam.

14. A recording medium according to Claim 2, wherein a metallic compound in said metallic compound-dispersed layer is a silver, nickel, cobalt or copper salt.

15. A recording medium according to Claim 14, wherein said metallic compound is a silver halide with a grain size from 0.01 $\mu$ to 1 $\mu$.

16. A recording medium according to Claim 14, wherein said metallic compound-dispersed layer is subjected to pattern exposure at the surface thereof.

17.  A recording medium according to Claim 1, wherein said physical development nucleus-containing layer is formed from colloidal silver grains in a gelatin dispersion in water, a silver iodobromide-gelatin emulsion is coated over said recording layer and physical development and subsequent washing are applied.

# FIG.1

# FIG.2

# FIG. 3

0098125

# FIG. 4

# FIG. 5

# FIG. 6

# FIG.7

Sputter   Time (min.)

# FIG.8

Sputter   Time (min.)

## DOCUMENTS CONSIDERED TO BE RELEVANT

EP 83303666.8

| Category | Citation of document with indication, where appropriate, of relevant passages | Relevant to claim | CLASSIFICATION OF THE APPLICATION (Int. Cl. ³) |
|---|---|---|---|
| A | <u>GB - A - 1 592 390</u> (JACOBS)<br>* Page 1, line 15; page 3, line 10; page 3, lines 38-60; page 3, lines 20-25; page 1, lines 5-10 * | 1-3,6, 7,13, 15,16 | G 11 B 7/24 |
| A,P | <u>GB - A - 2 101 788</u> (RCA)<br>* Claim 9; page 1, column 2, lines 123-128 * | 1,2,4, 7 | |
| A,D | <u>US - A - 3 661 584</u> (HEUVEL)<br>* Claims 1-20 * | 5,8,14 | |
| A | <u>EP - A1 - 0 014 227</u> (MATSUSHITA)<br>* Fig. 7,8 * | 10,11 | TECHNICAL FIELDS SEARCHED (Int. Cl. ³) |
| A | <u>DE - A - 2 402 385</u> (THOMSON-CSF)<br>* Page 4, lines 1-10 * | 2 | G 11 B 7/00<br>G 03 C 1/00<br>G 03 G 5/00 |

The present search report has been drawn up for all claims

| Place of search | Date of completion of the search | Examiner |
|---|---|---|
| VIENNA | 26-09-1983 | BERGER |